# EUROPÄISCHE PATENTSCHRIFT

(11) **EP 3 245 657 B1**
(45) Veröffentlichungstag und Bekanntmachung des Hinweises auf die Patenterteilung: **24.04.2024**
(21) Anmeldenummer: 16709746.8
(22) Anmeldetag: 09.03.2016
(51) Int. Cl.: H01B 3/40, C08G 59/50, H01B 3/04, H02K 3/30, H02K 15/12

(54) **ISOLATIONSSYSTEM, VERWENDUNGEN DAZU, SOWIE ELEKTRISCHE MASCHINE**
INSULATION SYSTEM, USES THERETO, AND ELECTRIC MACHINE
SYSTÈME D'ISOLATION, SES UTILISATIONS, ET MACHINE ÉLECTRIQUE

(30) Priorität: 18.03.2015 DE 102015204885
(43) Veröffentlichungstag der Anmeldung: 22.11.2017
(73) Patentinhaber: Innomotics GmbH, 90441 Nürnberg (DE)
(72) Erfinder: HUBER, Jürgen, 91058 Erlangen (DE); SCHIRM, Dieter, 96149 Breitengüßbach (DE); ÜBLER, Matthias, 92289 Ursensollen (DE)
(74) Vertreter: Siemens Patent Attorneys
(86) Internationale Anmeldenummer: PCT/EP2016/054998
(87) Internationale Veröffentlichungsnummer: WO 2016/146446

(56) Entgegenhaltungen:
- EP-A1- 0 996 132
- WO-A1-2016/050450
- DE-A1-102013 201 054
- US-A- 4 906 711
- US-A- 5 244 939
- HAM Y R ET AL: "A comparison of some imidazoles in the curing of epoxy resin", JOURNAL OF INDUSTRIAL AND ENGINEERING CHEMISTRY, THE KOREAN SOCIETY OF INDUSTRIAL AND ENGINEERING CHEMISTRY, KOREA, Bd. 16, Nr. 4, 25. Juli 2010 (2010-07-25), Seiten 556-559, XP027034149, ISSN: 1226-086X [gefunden am 2010-03-17]

## Beschreibung

Die Erfindung betrifft ein Isolationssystem einer elektrischen Maschine, ein anhydridfreies Imprägnierharz und einen Katalysator umfassend, sowie Verwendungen dazu, insbesondere ein Isolationssystem mit neuartigem Katalysator.

Elektrische Maschinen, insbesondere rotierende elektrische Maschinen, beinhalten eine elektrische Wicklung innerhalb eines Blechpakets. Diese besteht aus elektrischen Leitern (die ggf. bereits mit einer Primärisolation versehen sind) und festen Isolationswerkstoffen als Hauptisolation. Ohne weitere Maßnahmen gibt es zwischen dem Blechpaket, den Leitern und der Hauptisolation keine innige Verbindung, so dass Spalten und Hohlräume entstehen. Bei Betrieb unter atmosphärischen Bedingungen, wären diese Bereiche mit Luft gefüllt. Insbesondere bei Anwendungen im Hochspannungsbereich ist dies nicht zulässig, da elektrische Teilentladungen die Isolation in kürzester Zeit zerstören würden. Dies führt zum Ausfall der elektrischen Maschine.

Um eine innige Verbindung und das Verdrängen von Luft zu bewirken wird die Wicklung mittels eines härtbaren Imprägnierharzes oder Imprägnierlackes imprägniert, welcher beispielsweise in einem Umluftofen thermisch gehärtet wird. Die festen Isolationswerkstoffe können dabei porös ausgeführt sein um die Tränk- oder Imprägnierharzaufnahme zu erhöhen. Beispiele hierfür sind Glimmerbänder, Isolationspapiere oder Vliesstoffe.

Für die Imprägnierung von Maschinen mit Nennspannungen größer gleich 1kV sind Isolationssysteme aus festen Isolationswerkstoffen, Imprägnierharz bestehend aus Basisharz und Härterkomponenten bekannt, die in einem Vakuum-Druck-Imprägnierverfahren (VPI) zum Einsatz kommen. Bislang setzte man dazu Säureanhydride ein, die als Härter dienen und gleichzeitig die Viskosität herabsetzen, was einer zügigen und vollständigen Imprägnierung zu Gute kommt.

Mischungen aus EP-Harzen und den bekannten Härterkomponenten härten aber auch bei erhöhter Temperatur nicht spontan, sondern benötigen einen härtungsvermittelnden Beschleuniger oder Katalysator. Tertiäre Amine, quaternäre Oniumsalze oder Zinknaphthenat sind Katalysatoren, die nach dem Stand der Technik zur Anwendung kommen, wie aus der DE3824254A1, DE3003477A1 und/oder der WO 00/24006) bekannt ist.

Aus der DE 102014219844.5 ist ein Isolationssystem mit festen Isolationswerkstoffen und einem Imprägnierharz bekannt, wobei das Imprägnierharz ein beliebiges Reaktionsharz mit Oxiranfunktionalitäten oder eine Mischung verschiedener Reaktionsharze mit Oxiranfunktionalitäten umfasst und im Isolationssystem mindestens ein thermisch aktivierbarer und/oder gekapselter Härtungskatalysator vorliegt.

Das erfindungsgemäße Isolationssystem umfasst ein Imprägnierharz, ein oder mehrere Basisharze umfassend, sowie eine oder mehrere Härtungskatalysatoren, beispielsweise einen Depotbeschleuniger, der in den festen porösen Isolationswerkstoffen vorgelegt ist und einen sonstigen Katalysator.

Um eine möglichst hohe Lagerstabilität des Imprägnierharzes zu gewährleisten, wird der Härtungskatalysator, der letztlich die Polymerisation initiiert, bevorzugt dem handelsüblichen Imprägnierharz nicht unmittelbar zugesetzt, sondern in den festen porösen Isolationsmaterialien der Hauptisolation (wie z.B. Glimmerbänder) eingelagert. Diese Art des Härtungskatalysators wird im Folgenden Depotbeschleuniger genannt. Der Depotbeschleuniger kommt mit dem Imprägnierharz erst während der Imprägnierung in Berührung.

Dies bedeutet, dass nach dem Stand der Technik, bei ausschließlichem Vorliegen eines Depotbeschleunigers nur der Teil des Imprägnierharzes mit dem Katalysator in Kontakt kommt, der in die Hauptisolation der Wicklung einimprägniert ist.

Der Teil des Imprägnierharzes jedoch, der in Oberflächennähe verbleibt, hat keinen oder nur einen unzureichenden Kontakt zum Depotbeschleuniger, was zu einer unvollständigen Aushärtung führt.

Dadurch resultieren verschiedene Negativaspekte im Isolationssystem wie mangelnden Formstoffeigenschaften an der Wicklungsoberfläche, reduzierte thermische Beständigkeit, reduzierte chemische Beständigkeit, erhöhte Neigung zur Schmutzaufnahme durch eine klebende, weil nicht vollständig ausgehärtete, Oberfläche.

Insbesondere angesichts der relativ neuen, bevorzugt von Anhydriden generell und insbesondere von flüssigen Anhydridenfreien Imprägnierharzen mit Oxiranfunktionalitäten wird nach einer Lösung gesucht, wie dem Imprägnierharz Katalysator zugänglich gemacht werden kann, ohne dass es sich nachteilig auf entweder die Lagerstabilität und/oder den Imprägnierprozess auswirkt.

Aufgabe der vorliegenden Erfindung ist es deshalb, ein Isolationssystem mit einem Katalysator für ein Imprägnierharz, insbesondere für eines mit Oxiranfunktionalitäten, das frei an flüssigem Säureanhydrid ist, zur Verfügung zu stellen, wobei der Katalysator in den Bereichen des Isolationssystems wirksam ist, die keine Berührung mit dem Depotbeschleuniger aus den festen Isolationswerkstoffen haben.

Lösung der Aufgabe und Gegenstand der vorliegenden Erfindung ist daher ein Isoliersystem, feste Isolationswerkstoffe, ein Imprägnierharz mit Oxiranfunktionalitäten, einen Depotbeschleuniger in den festen Isolationswerkstoffen sowie einen Katalysator zur Initiierung der Härtung umfassend, wobei der Katalysator zumindest zum Teil unter Härtungsbedingungen gasförmig vorliegt. Außerdem ist die Verwendung eines derartigen Isolationssystems zur Herstellung einer Isolation für eine elektrische Maschine, eine Spule und/oder einer Leiteranordnung Gegenstand der Erfindung. Schließlich ist eine elektrische Maschine, eine Spule und eine Leiteranordnung Gegenstand der vorliegenden Erfindung, ein Isolationssystem umfassend, bei dem ein Imprägnierharz mit Depotbeschleuniger und Katalysator vorliegt, wobei der Katalysator unter Härtungsbedingungen zumindest teilweise gasförmig vorliegt, Gegenstand der Erfindung.

Die Imprägnierbedingungen entsprechen den bekannten Bedingungen, unter denen eine Vakuum-Druck-Imprägnierung (VPI) durchgeführt wird.

Um die mit Imprägnierharz benetzten Oberflächen möglichst vollständig mit dem Katalysator nach der Imprägnierung der festen Isolationswerkstoffe in Kontakt zu bringen wird gemäß der Erfindung der Einsatz eines Härtungsbedingungen, gasförmigen Katalysators oder Beschleunigers vorgeschlagen. Dieser gelangt über Konvektion- und/oder Diffusionsprozesse an die Harzoberfläche und initiiert dort die Härtungsreaktion. Wichtige Einflussfaktoren für die Funktionsfähigkeit und Tiefenwirksamkeit dieser Härtungsinitiierung über die Gasphase sind der Dampfdruck des Beschleunigers, dessen Aktivierungstemperatur und der zugrunde liegende Reaktionsmechanismus.

Nach einer vorteilhaften Ausführungsform der Erfindung liegt das Imprägnierharz mit Oxiranfunktionalitäten in einer Form vor, in der der gasförmige Katalysator an der Oberfläche chemisorbiert wird.

Nach einer weiteren Ausführungsform der Erfindung ist der gasförmige Katalysator an ein Trägermaterial gebunden und kann durch Erhöhung der Temperatur freigesetzt werden.

Der Katalysator umfasst zumindest eine Verbindung in Form eines Alkyl-Imidazols.

Der Katalysator kann auch eine Mischung von mehreren Alkyl-Imidazolen umfassen. Besonders bevorzugt sind 1,2-Di-Alkylimidazole.

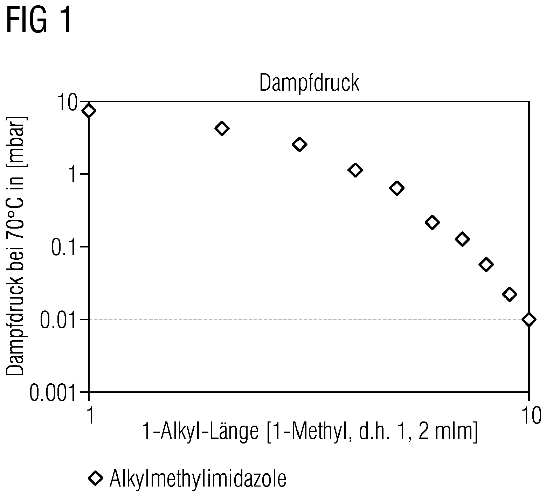

Nach einer vorteilhaften Ausführungsform der Erfindung liegt im Isolationssystem das Imprägnierharz mit einem Reaktivverdünner, wie beispielsweise Propylencarbonat, vor. Der Reaktivverdünner dient dazu, die Viskosität des Imprägnierharzes herabzusetzen, damit die festen Isolationswerkstoffe während des Imprägnierens zügig und ausreichend benetzt werden. Vorteilhafterweise ist es bei den bevorzugt eingesetzten Alkyl-Imidazolen möglich, den Dampfdruck der Alkyl-Imidazole gezielt durch eine Derivatisierung der Seitenkette einzustellen. Dies zeigt insbesondere die Figur 1, in der der Dampfdruck der 1-Alkyl-2-methyl-imidazole bei 70°C in Abhängigkeit der 1-Alkylseitenkette dargestellt ist.

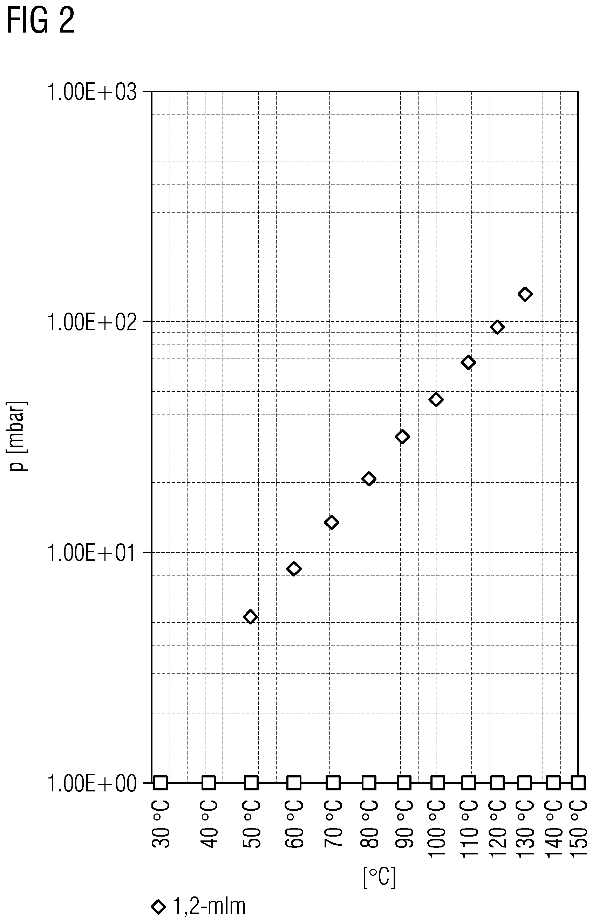

In Figur 2 wird der Dampfdruck von 1,2-Dimethylimidazol in Abhängigkeit der Temperatur dargestellt.

Weiterhin lässt sich durch Variation der Seitenkette, die Elektronendichte im Imidazolring steuern, welche für die Reaktivität der Imidazole verantwortlich ist. So lässt sich z.B. durch eine Alkylkette in 2-Stellung des Rings die Reaktivität durch den +I-Effekt erhöhen.

Somit lässt sich eine Abstimmung des Dampfdrucks und der Reaktivität auf die beabsichtigten Härtungsbedingungen und das verwendete Imprägnierharz durchführen.

Ggf. kann dies auch durch eine Mischung verschiedener Imidazole weiter verfeinert werden. Auch das Vorlegen der Imidazole in inerten Lösungsmitteln mit geeigneten Dampfdrücken als Verdampfungshilfe ist gemäß einer vorteilhaften Ausführungsform vorgesehen.

Weiterhin ist das Binden der Alkylimidazole an Adsorbentien und/oder Trägermaterialien wie Aktivkohle, Zeolithe, Metal-Organic-Frameworks (MOF) und/oder polymerer Adsorbentien möglich. Beispielsweise erfolgt die (Wieder-)Freisetzung der Alkylimidazole durch Temperatureinwirkung.

Ebenso ist es möglich, die Alkylimidazole "In-Situ", durch eine chemische Reaktion vor Ort herzustellen und freizusetzen.

Als Ausführungsbeispiel wird eine Mischung eines niedrigviskosen Bisphenol-F-Diglycidylether mit einem Prozent an Propylencarbonat beschrieben, die in einer gestuften Härtung von 70°C bis 145°C mittels einer 1,2-Dimethylimidazolhaltigen Atmosphäre gehärtet wird.

Hier sind abhängig von der Konzentration an 1,2-Dimethylimidazol in der Atmosphäre Glasübergangstemperaturen von 135 bis 145°C möglich.

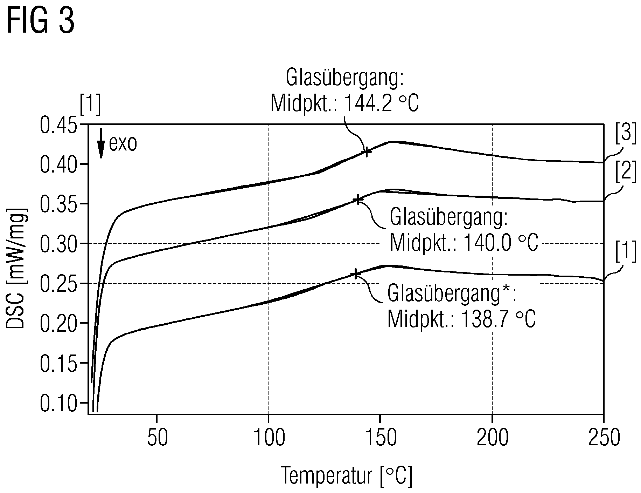

Figur 3 zeigt die entsprechende Graphik, in der die Glasübergangstemperaturen einer Mischung aus Bisphenol-F-Diglycidylether mit einem Prozent an Propylencarbonat, gehärtet in 1,2-Dimethylimidazolhaltiger Atmosphäre, gezeigt werden.

Damit ist dargelegt, dass durch die vorliegende Erfindung eine Designbarkeit von Dampfdruck und Reaktivität des Katalysators auf Alkyl-Imidazolbasis, insbesondere durch Variation der Seitenketten der Alkyl-Imidazole, zur Anpassung an Imprägnierharz und Prozessbedingungen zugänglich ist.

Besonders bevorzugt wird ein anhydridfreies Imprägnierharz mit einem Depotbeschleuniger eingesetzt, deren Härtungsmechanismus der anionischen oder kationischen Polymerisation folgt. Dann kann durch die oberflächliche Behandlung des Imprägnierharzes mit gasförmigem Katalysator auch eine Härtung in den Bereichen initiiert werden, in denen der Depotbeschleuniger nicht ausreichend aktiv ist.

Durch eine Härtungsreaktion, die über ionische Polymerisation erfolgt, kann die Zugabe eines gasförmigen Katalysators eine Tiefenwirkung entwickeln, die auch Falten und Taschen in den festen Isolationswerkstoffen der Wicklung erreicht.

Nach einer vorteilhaften Ausführungsform ist das Imprägnierharz ein Epoxidharz. Beispielsweise umfasst das Epoxidharz eine oder mehrere Verbindungen, ausgewählt aus der Gruppe folgender Verbindungen: undestillierter und/oder destillierter, ggf. reaktivverdünnter Bisphenol-A-Diglycidylether, undestillierter und/oder destillierter, ggf. reaktivverdünnter Bisphenol-F-Diglycidylether, hydrierter Bisphenol-A-Diglycidylether und/oder hydrierter Bisphenol-F-Diglycidylether, reiner und/oder mit Lösemitteln verdünnter Epoxy-Novolak und/oder Epoxy-Phenol-Novolak, cycloaliphatische Epoxidharze wie 3,4-epoxycyclohexylmethyl-3,4-epoxycyclohexylcarboxylat z.B. CY179, ERL-4221; Celloxide 2021P, Bis(3,4-epoxycyclohexylmethyl)adipat, z.B. ERL-4299; Celloxide 2081, Vinylcyclohexendiepoxid, z.B. ERL-4206; Celloxide 2000, 2-(3,4-epoxycyclohexyl-5,5-spiro-3,4-epoxy)-cyclohexan-meta-dioxan z.B. ERL-4234; Hexahydrophthalsäurediglycidylester, z.B. CY184, EPalloy 5200; Tetrahydrophthalsäurediglycidyl-ether z.B. CY192; glycidierte Aminoharze (N,N-Diglycidyl-para-glycidyloxyanilin z.B. MY0500, MY0510, N,N-Diglycidyl-meta-glycidyloxyanilin z.B. MY0600, MY0610, N,N,N',N'-Tetraglycidyl-4,4'-methylendianilin z.B. MY720, MY721, MY725, sowie beliebiger Mischungen der vorgenannten Verbindungen.

Nach einer Ausführungsform umfasst das Imprägnierharz noch zumindest ein Additiv und/oder zumindest einen Füllstoff. Nach einer vorteilhaften Ausführungsform der Erfindung liegt das anhydridfreie Imprägnierharz in einer Form vor, in der der gasförmige Beschleuniger an der Oberfläche chemisorbiert werden kann.

Nach einer weiteren vorteilhaften Ausführungsform ist das Binden der Alkylimidazole an Adsorbentien und/oder Trägermaterialien wie Aktivkohle, Zeolithe, Metal-Organic-Frameworks (MOF) und/oder polymerer Adsorbentien möglich, wobei eine Freisetzung z.B. durch Temperaturerhöhung erfolgt.

Durch die vorliegende Erfindung ist es erstmals möglich, einem Säureanhydrid-freien Imprägnierharz neben dem Depotbeschleuniger einen weiteren Härtungskatalysator zugänglich zu machen ohne diesen direkt dem Imprägnierharz beizumischen. Dadurch wird eine ausreichende Härtung des Imprägnierharzes auch in den Oberflächen und Oberflächennahen Bereichen ermöglicht, ohne negative Auswirkungen auf die Lagerstabilität des Tränkharzes zu nehmen.

Nachteile, wie mangelnden Formstoffeigenschaften an der Wicklungsoberfläche, reduzierte thermische Beständigkeit, reduzierte chemische Beständigkeit, erhöhte Neigung zur Schmutzaufnahme durch eine klebende, weil nicht vollständig ausgehärtete, Oberfläche können gemäß der Erfindung vermindert oder vermieden werden.

Die Erfindung betrifft ein Isolationssystem einer elektrischen Maschine, ein Imprägnierharz und einen Katalysator umfassend, sowie Verwendungen dazu, insbesondere ein Isolationssystem mit neuartigem Katalysator. Durch die vorliegende Erfindung ist es erstmals möglich, einem Säureanhydrid-freien Imprägnierharz neben dem Depotbeschleuniger einen weiteren Härtungskatalysator zugänglich zu machen ohne diesen direkt dem Imprägnierharz beizumischen, Dadurch wird eine ausreichende Härtung des Imprägnierharzes auch in den Oberflächen und Oberflächennahen Bereichen ermöglicht, ohne negative Auswirkungen auf die Lagerstabilität des Tränkharzes zu nehmen. Nachteile, wie mangelnden Formstoffeigenschaften an der Wicklungsoberfläche, reduzierte thermische Beständigkeit, reduzierte chemische Beständigkeit, erhöhte Neigung zur Schmutzaufnahme durch eine klebende, weil nicht vollständig ausgehärtete, Oberfläche können gemäß der Erfindung vermindert oder vermieden werden.

## Patentansprüche

1. Isolationssystem zur Verarbeitung mittels VPI Prozess, einen festen Isolationswerkstoff mit einem Depotbeschleuniger und ein Imprägnierharz mit Oxiranfunktionalitäten umfassend, wobei nach der Imprägnierung mittels VPI Prozess zusätzlich ein Katalysator vorgesehen ist, der zumindest zum Teil unter Härtungsbedingungen gasförmig vorliegt und über Konvektion-und/oder Diffusionsprozesse an die Oberfläche des Imprägnierharzes gelangt, dort die Härtung nach der Imprägnierung des festen Isolationswerkstoffes initiiert und wobei dieser Katalysator zumindest eine Verbindung in Form eines Alkyl-Imidazols umfasst.

2. Isolationssystem nach Anspruch 1, wobei der Härtungsmechanismus des Imprägnierharzes einer ionischen Polymerisation folgt.

3. Isolationssystem nach einem der vorstehenden Ansprüche, wobei der gasförmige Katalysator ein 1,2-Di-Alkyl-Imidazol umfasst.

4. Isolationssystem nach einem der vorstehenden Ansprüche, wobei der gasförmige Katalysator eine Mischung verschiedener Alkyl-Imidazole und/oder Aryl-Imidazole umfasst.

5. Isolationssystem nach einem der vorstehenden Ansprüche, wobei der gasförmige Katalysator eine Mischung verschiedener 1,2-Di-Alkyl-Imidazole umfasst.

6. Isolationssystem nach einem der vorstehenden Ansprüche, das zumindest ein dem Imprägnierharz zugesetztes Additiv und/oder Füllstoff umfasst.

7. Isolationssystem nach einem der vorstehenden Ansprüche, wobei das dem Imprägnierharz zugesetzte Additiv ein Reaktivverdünner ist.

8. Isolationssystem nach einem der vorstehenden Ansprüche, bei dem der gasförmige Katalysator an der Oberfläche des Imprägnierharzes chemisorbierbar ist.

9. Isolationssystem nach einem der vorstehenden Ansprüche, wobei der gasförmige Katalysator an ein Trägermaterial und/oder an ein Adsorbens wie Aktivkohle, Zeolithe und/oder Metal-Organic-Frameworks gebunden vorliegt.

10. Isolationssystem nach Anspruch 9, bei dem der gasförmige Katalysator durch Temperaturänderung, Einwirkung einer Strahlung und/oder eines Magnetfeldes desorbierbar ist.

11. Isolationssystem nach einem der vorstehenden Ansprüche, wobei der gasförmige Katalysator chemisch, beispielsweise ionisch und/oder über H-Brückenbindungen gebunden vorliegt.

12. Verwendung eines Isolationssystems nach einem der Ansprüche 1 bis 11 zur Herstellung einer Isolation für eine elektrische Maschine, eine Spule und/oder einer Leiteranordnung.

13. Elektrische Maschine, eine Spule oder eine Leiteranordnung mit einem Isolationssystem, das ein Isolationssystem nach einem der Ansprüche 1 bis 11 umfasst

## Claims

1. Insulation system for processing by a VPI process, comprising a solid insulation material with a depot accelerator and an impregnating resin having oxirane functionalities, wherein, after the impregnation by the VPI process, a catalyst is additionally provided, which is at least partly in gaseous form under hardening conditions and arrives via convection and/or diffusion processes at the surface of the impregnating resin, where it initiates the hardening after the impregnation of the solid insulation material, and wherein this catalyst comprises at least one compound in the form of an alkylimidazole.

2. Insulation system according to Claim 1, wherein the hardening mechanism of the impregnating resin follows an ionic polymerization.

3. Insulation system according to either of the preceding claims, wherein the gaseous catalyst comprises a 1,2-dialkylimidazole.

4. Insulation system according to any of the preceding claims, wherein the gaseous catalyst comprises a mixture of various alkylimidazoles and/or arylimidazoles.

5. Insulation system according to any of the preceding claims, wherein the gaseous catalyst comprises a mixture of various 1,2-dialkylimidazoles.

6. Insulation system according to any of the preceding claims, which comprises at least one additive and/or filler added to the impregnating resin.

7. Insulation system according to any of the preceding claims, wherein the additive added to the impregnating resin is a reactive diluent.

8. Insulation system according to any of the preceding claims, in which the gaseous catalyst is chemisorbable at the surface of the impregnating resin.

9. Insulation system according to any of the preceding claims, wherein the gaseous catalyst is present bound to a carrier material and/or to an adsorbent such as activated carbon, zeolites and/or metal-organic frameworks.

10. Insulation system according to Claim 9, in which the gaseous catalyst is desorbable via a temperature change, the action of radiation and/or a magnetic field.

11. Insulation system according to any of the preceding claims, wherein the gaseous catalyst is in chemically bound form, for example in ionically bound form and/or bound via hydrogen bonds.

12. Use of an insulation system according to any of Claims 1 to 11 for production of an insulation for an electrical machine, a coil and/or a conductor arrangement.

13. Electrical machine, coil or conductor arrangement having an insulation system comprising an insulation system according to any of Claims 1 to 11.

## Revendications

1. Système d'isolation pour le traitement au moyen d'un processus VPI, comportant un matériau d'isolation solide avec un accélérateur de dépôt et une résine d'imprégnation avec des fonctionnalités oxirane, dans lequel, après l'imprégnation au moyen d'un processus VPI, un catalyseur est en outre prévu, lequel se présente au moins en partie sous forme gazeuse dans des conditions de durcissement et remonte à la surface de la résine d'imprégnation par des processus de convection et/ou de diffusion, le durcissement y est amorcé après l'imprégnation du matériau d'isolation solide, et dans lequel ce catalyseur comporte au moins un composé sous la forme d'un alkyl-imidazole.

2. Système d'isolation selon la revendication 1, dans lequel le mécanisme de durcissement de la résine d'imprégnation suit une polymérisation ionique.

3. Système d'isolation selon l'une des revendications précédentes, dans lequel le catalyseur sous forme gazeuse comporte un 1,2-di-alkyl-imidazole.

4. Système d'isolation selon l'une des revendications précédentes, dans lequel le catalyseur sous forme gazeuse comporte un mélange de différents alkyl-imidazoles et/ou aryl-imidazoles.

5. Système d'isolation selon l'une des revendications précédentes, dans lequel le catalyseur sous forme gazeuse comporte un mélange de différents 1,2-di-alkyl-imidazoles.

6. Système d'isolation selon l'une des revendications précédentes, qui comporte au moins un additif et/ou une charge ajoutés à la résine d'imprégnation.

7. Système d'isolation selon l'une des revendications précédentes, dans lequel l'additif ajouté à la résine d'imprégnation est un diluant réactif.

8. Système d'isolation selon l'une des revendications précédentes, dans lequel le catalyseur sous forme gazeuse peut être chimisorbé à la surface de la résine d'imprégnation.

9. Système d'isolation selon l'une des revendications précédentes, dans lequel le catalyseur sous forme gazeuse se présente sous forme liée à un matériau support et/ou à un adsorbant comme du charbon actif, des zéolithes et/ou des structures organométalliques.

10. Système d'isolation selon la revendication 9, dans lequel le catalyseur sous forme gazeuse peut être désorbé par variation de température, action d'un rayonnement et/ou d'un champ magnétique.

11. Système d'isolation selon l'une des revendications précédentes, dans lequel le catalyseur sous forme gazeuse se présente sous forme liée de manière chimique, par exemple de manière ionique et/ou par l'intermédiaire de liaisons H.

12. Utilisation d'un système d'isolation selon l'une des revendications 1 à 11 pour la fabrication d'une isolation pour une machine électrique, une bobine et/ou un agencement conducteur.

13. Machine électrique, bobine ou agencement conducteur avec un système d'isolation qui comporte un système d'isolation selon l'une des revendications 1 à 11.
